# EUROPEAN PATENT APPLICATION

(11) **EP 1 595 632 A1**
(43) Date of publication of application: **16.11.2005**
(21) Application number: 05252585.4
(22) Date of filing: 26.04.2005
(51) Int. Cl.: B23H 7/10

(54) **Wire-cut electric discharge machine**

(30) Priority: 28.04.2004 JP 2004134200
(71) Applicant: FANUC LTD, Minamitsuru-gun, Yamanashi 401-0597 (JP)
(72) Inventor: Kita, Yuki Room 10-203, Minamitsuru-gun Yamanashi 401-0511 (JP); Takayama, Yushi Room 5-205, Minamitsuru-gun Yamanashi 401-0511 (JP); Makino, Yoshinori Room 11-307, Minamitsuru-gun Yamanashi 401-0511 (JP)
(74) Representative: Billington, Lawrence Emlyn

(57) **Abstract**

A wire-cut electric discharge machine comprises a wire running system, in which a wire is run through a wire bobbin (11), brake rollers (12), a wire guide (14), and a wire take-up device (17) in the order named. As a device for reducing the variation in wire tension is arranged between the wire bobbin (11) and the brake rollers (12) in the wire running system, variation of the wire tension that is caused on the wire supply side of the brake rollers can be restrained effectively.

## Description

### BACKGROUND OF THE INVENTION

### Field of the Invention

The present invention relates to a wire-cut electric discharge machine, and more particularly, to a structure for reducing vibration of a wire electrode.

### Description of the Related Art

When the tension of a wire in a wire-cut electric discharge machine varies to cause the wire to vibrate, the machining accuracy of the machine lowers, so that the surface accuracy and straightness accuracy of a workpiece lower. Conventionally, in order to restrain such wire vibration, machining conditions, such as current, voltage, etc., and set machining speed are adjusted to apply tension to the wire. In a known method for applying tension to the wire, a roller of a wire running system is made reluctant to rotate as its shaft is subjected to friction. By doing this, the roller is braked so that the wire is tensioned.

If the wire vibration is reduced by applying tension to the wire, the rotational speed or frictional force on the roller varies, so that the wire tension varies inevitably. In order to restrain the variation of the wire tension, in a known method, the wire running system is provided with a tension detector, whereby the wire feed speed can be controlled. If this tension detector is used, however, the electric discharge machine is expensive. Since it involves feedback control, it cannot quickly respond to the variation of the wire tension.

Also known is a wire-cut electric discharge machine in which a mechanism for absorbing a wire vibration in the wire running direction, among other mechanical wire vibrations caused by spark discharge between a wire and a workpiece, is provided between a wire guide and brake rollers (see Japanese Patent Application Laid-open No. 06-079536).

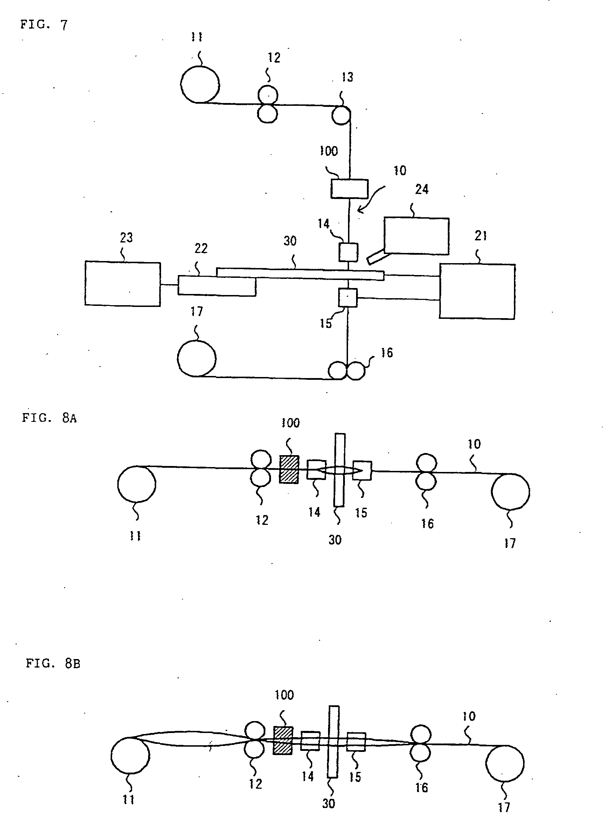

FIG. 7 is a diagram for illustrating an outline of the wire-cut electric discharge machine that is provided with the mechanism for absorbing the wire vibration. This electric discharge machine comprises a wire bobbin 11, brake rollers 12, fixed pulley 13, upper wire guide 14, lower wire guide 15, take-up rollers 16, and take-up bobbin 17. These elements of the system supply and wind up a wire in the order named. Further, a vibration absorbing mechanism 100 is provided between the fixed pulley 13 and the upper wire guide 14. It can absorb vibrations that are caused by spark discharge between the upper and lower wire guides 14 and 15.

Further, the vibration absorbing mechanism 100 described in the aforesaid patent document comprises a pair of rods, a pair of vibration absorbing posts, a pivot, and a movable pulley. The rods are set up parallel to each other and can shift their positions in their axial direction. The vibration absorbing posts absorb mechanical vibration of the rods. The pivot is stretched between the rods. The movable pulley is supported on the pivot. The wire is passed around and guided by the pulley.

The wire-cut electric discharge machine of FIG. 7 comprises a voltage applying section 21, table 22, control section 23, machining fluid supply section 24, etc., besides the aforesaid wire running system. The voltage applying section 21 applies voltage between a wire 10 and a workpiece 30. The table 22 moves the workpiece 30 in the directions of two rectangular axes (X- and Y-axes).

### SUMMARY OF THE INVENTION

As shown in FIG. 8A, the vibration absorbing mechanism 100 in the wire running system of the conventional wire-cut electric discharge machine shown in FIG. 7 is located between the upper wire guide 14 and the brake rollers 12, and serves to absorb vibrations that are caused by spark discharge between the upper and lower wire guides 14 and 15. Thus, there is a problem that variations of the wire tension that are attributable to any other factors cannot be fully reduced.

On the other hand, the inventor hereof found that variations of the wire tension between the upper and lower wire guides 14 and 15 owe more to the vibration generated on the wire supply side (upstream side) of the brake rollers 12 than to the vibration attributable to the spark discharge between the wire guides.

On the wire supply side of the brake rollers 12, as shown in FIG. 8B, the wire tension sometimes may vary owing to variation of the rotational speed of the wire bobbin 11 or the friction of the brake rollers 12. Since the wire 10 is continuous, the variation of the wire tension caused on the wire supply side of the brake rollers 12 also influences that part of the wire which is situated between the upper and lower wire guides 14 and 15 after passing between the rollers 12.

Thereupon, the inventor hereof found that the variation of the wire tension caused on the wire supply side of the brake rollers 12 cannot be fully absorbed by the vibration absorbing mechanism 100 that is located between the upper wire guide 14 and the rollers 12 and that the variation of the wire tension cannot be fully lowered.

In the vibration absorbing mechanism 100, the fluctuation of the wired movable pulley in the running direction of the wire is absorbed by a spring portion that elastically urges in the same direction. Since an effect to restrain the variation of the wire tension changes depending on the fluctuation, therefore, the restraint of the tension variation cannot enjoy good linearity. Since the range of variation that can be restrained is limited by the fluctuation of the spring portion, moreover, there is a problem that a great wire tension variation cannot be restrained.

Since the tension variation restraint characteristics depend on the elasticity of the spring portion only, furthermore, it cannot be easily adjusted to the range of tension variation of a different wire.

Accordingly, the object of the present invention is to effectively restrain the tension variation of a wire that is caused on the wire supply side of brake rollers, improve the linearity of the wire tension variation, cope with a wide range of tension variation, and adjust the tension variation restraint characteristics.

A wire-cut electric discharge machine according to the present invention comprises: a wire running system in which a wire is run through a wire bobbin, brake rollers, a wire guide, and a wire take-up device in the order named; and a device for reducing variation in wire tension (wire transmission variation reduction device) which is arranged between the wire bobbin and the brake rollers in the wire running system. Since the wire tension variation reduction device is located between the wire bobbin and the brake rollers, variation of the wire tension that is caused on the wire supply side of the brake rollers can be restrained effectively.

The wire tension variation reduction device includes a roller in contact with the wire, a shaft supporting the roller, and an elastic body for urging the shaft to apply a tension to the wire. The shaft urged by the elastic body applies the tension to the wire through the roller.

The shaft is rockably supported by a radial bearing on the side of a body of the wire-cut electric discharge machine. The shaft can be rocked with respect to the electric discharge machine by the radial bearing. Since the shaft is urged by the elastic body, moreover, it rocks to cause the roller to follow the fluctuation of the wire, thereby bringing the roller continually into contact with the wire and applying tension to the wire, if the wire tension varies.

Since the roller is rocked by the shaft that supports it, a trace of the displacement of the shaft is arcuate. Thus, the tension that is applied to the wire changes with good linearity, depending on a deflection or slack of the wire that is caused by the tension variation.

The range of variation in which the tension the roller applies to the wire is increased or decreased can be enlarged by locating the point of action of the elastic body on the shaft at a given distance from the roller.

Further, the elastic body has its end portions attached individually to the shaft and the electric discharge machine so that at least one of attachment positions of the elastic body can be changed. Furthermore, the elastic body is a spring member, the shaft and/or the wire-cut electric discharge machine body has a plurality of attachment positions, and one end of the spring member is alternatively attached to any of the attachment positions on the shaft and/or the electric discharge machine.

The magnitude of the tension applied to the wire can be adjusted by varying the point of action at which the elastic body acts on the shaft.

In restraining the variation of the wire tension, as described above, the linearity of the applied tension is satisfactory, and the magnitude of the applied tension can be adjusted. Thus, the wire tension between the wire guides can be kept constant, and the surface accuracy and straightness accuracy of a workpiece can be improved.

A damper may be attached to the elastic body, whereby the vibration restraint characteristics can be improved.

The wire tension variation reduction device according to the present invention can be manufactured at low cost, and can directly physically cope with the wire tension variation, thus ensuring quick response.

Since the wire tension variation reduction device of the invention is located between the wire bobbin and the brake rollers, moreover, it can be set without approaching the wire guides, unlike the case with a conventional one. Thus, its installation and maintenance are easy.

According to the present invention arranged in this manner, the variation of the wire tension caused on the wire supply side of the brake rollers can be restrained effectively. Further, the linearity of the wire tension variation can be improved, and a wide range of variation can be coped with. Furthermore, the tension vibration restraint characteristics can be regulated by adjusting the magnitude of the applied tension.

### BRIEF DESCRIPTION OF THE DRAWINGS

The above and other objects and features of the invention will be more apparent from the ensuing description taken in connection with the accompanying drawings, in which:
FIG. 1 is a diagram for illustrating a wire running system of a wire-cut electric discharge machine according to the invention;
FIG. 2 shows an outline of the electric discharge machine according to the invention;
FIG. 3 is a schematic diagram of a wire tension variation reduction device of the electric discharge machine of FIG. 2;
FIG. 4 is a diagram showing elements, such as a roller, shaft, etc., constituting the wire tension variation reduction device of FIG. 3;
FIGS. 5A and 5B are diagrams for illustrating an operation of the wire tension variation reduction device of the invention to keep tension constant;
FIGS. 6A and 6B are diagrams for illustrating how attachment positions of a spring member on a body of the electric discharge machine can be selected;
FIG. 7 is a diagram for illustrating an outline of a conventional example of a wire-cut electric discharge machine provided with a vibration absorbing mechanism; and
FIGS. 8A and 8B are diagrams for illustrating a function of the vibration absorbing mechanism used in the electric discharge machine of FIG. 7.

### DETAILED DESCRIPTION OF THE PREFERRED EMBODIMENTS

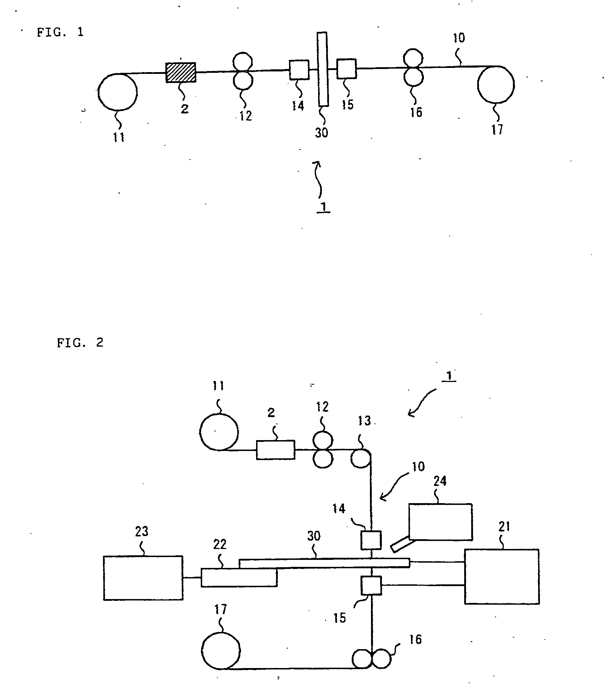

FIG. 1 is a diagram for illustrating an outline of a wire-cut electric discharge machine according to the present invention. The wire-cut electric discharge machine 1, like the prior art example shown in FIG. 8, comprises a wire running system, which includes a wire bobbin 11, brake rollers 12, upper wire guide 14, lower wire guide 15, take-up rollers 16, and take-up bobbin 17. These elements of the system supply and wind up a wire in the order named. In this wire running system, a device (wire tension variation reduction device) 2 for reducing the variation of the wire tension is provided between the wire bobbin 11 and the brake rollers 12. The wire tension variation reduction device 2 serves to restrain the variation of the wire tension that is caused on the wire supply side of the brake rollers 12.

If the wire tension fluctuates on the wire supply side of the brake rollers 12 in FIG. 1, owing to variation of the rotational speed of the wire bobbin 11 or the friction of the brake rollers 12, the wire tension variation reduction device 2 of the present invention absorbs the variation of the wire tension, thereby adjusting the wire tension for steadiness. If the rotational speed of the wire bobbin 11 or the friction of the brake rollers 12 varies so that the wire tension on the wire supply side of the brake rollers 12 varies, therefore, the variation of the wire tension is restrained by the wire tension variation reduction device 2. Thus, there is no possibility of the variation of the wire tension influencing that wire portion which is situated between the upper and lower wire guides 14 and 15 beyond the brake rollers 12.

FIG. 2 shows an outline of the wire-cut electric discharge machine of the invention. The electric discharge machine shown in FIG. 2 may be constructed substantially in the same manner as the conventional wire-cut electric discharge machine shown in FIG. 7, except for the wire tension variation reduction device 2.

The wire-cut electric discharge machine 1 shown in FIG. 2 comprises the wire running system, which includes the wire bobbin 11, brake rollers 12, fixed pulley 13, upper wire guide 14, lower wire guide 15, take-up rollers 16, and take-up bobbin 17. These elements of the system supply and wind up the wire in the order named. In this wire running system, the wire tension variation reduction device 2 is provided between the wire bobbin 11 and the brake rollers 12. The wire tension variation reduction device 2 absorbs the variation of the wire tension that is caused on the wire supply side of the brake rollers 12 by the variation of the rotational speed of the wire bobbin 11 or the friction of the brake rollers 12.

In the example shown in FIGS. 1 and 2, the wire having passed between the take-up rollers 16 is wound up on the take-up bobbin 17. Alternatively, however, the used wire wound up by the rollers 16 may be collected in a recovery box (not shown) without being delivered to the bobbin 17.

The wire-cut electric discharge machine 1 comprises a voltage applying section 21, table 22, control section 23, machining fluid supply section 24, etc., besides the aforesaid wire running system. The voltage applying section 21 applies voltage between a wire 10 and a workpiece 30. The table 22 moves the workpiece 30 in the directions of two rectangular axes (X- and Y-axes).

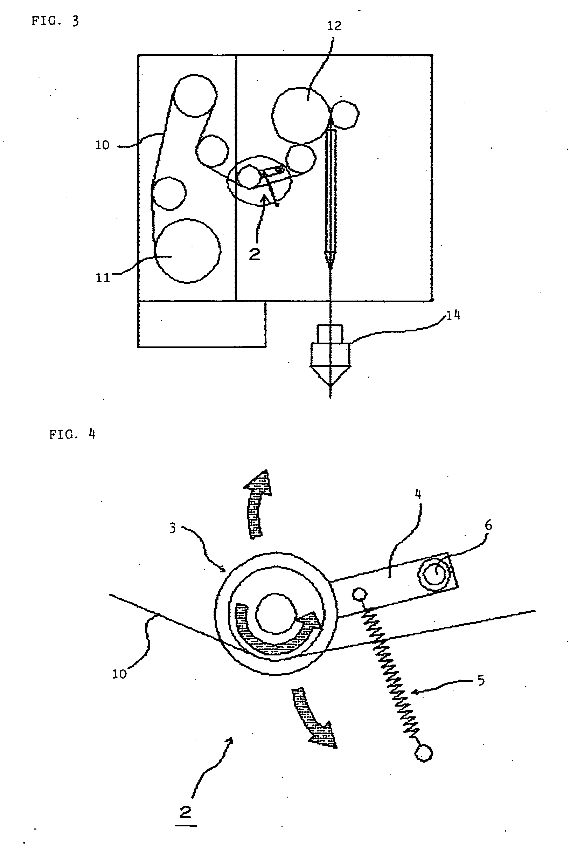

An outline and operation of the wire tension variation reduction device will now be described with reference to FIGS. 3 to 6.

As shown in FIG. 3, the wire tension variation reduction device 2 is provided between the wire bobbin 11 and the brake rollers 12 and applies tension to the wire 10. As shown in FIG. 4, the reduction device 2 comprises a roller 3 in contact with the wire 10, a shaft 4 that supports the roller 3, and a spring member 5 that urges the shaft 4 to apply tension to the wire 10. The roller 3 is supported on one end of the shaft 4, and rotates in contact with the wire 10, thereby urging the wire 10 in one direction.

The other end of the shaft 4 is rockably mounted on the wire-cut electric discharge machine side by a bearing 6. The bearing 6 may be attached to any desired part of the electric discharge machine.

The tension is applied to the wire by rocking the shaft 4 on which the roller 3 is mounted by means of the spring member 5 so that the roller 3 touches and presses the wire 10 in one direction. One end of the spring member 5 is anchored to the shaft 4, and the other end to the wire-cut electric discharge machine side. The other end of the spring member 5, like the bearing 6 of the shaft 4, may be attached to any desired part of the discharge machine. The spring member 5 rocks the shaft 4 in a direction such that the roller 3 touches and presses the wire 10.

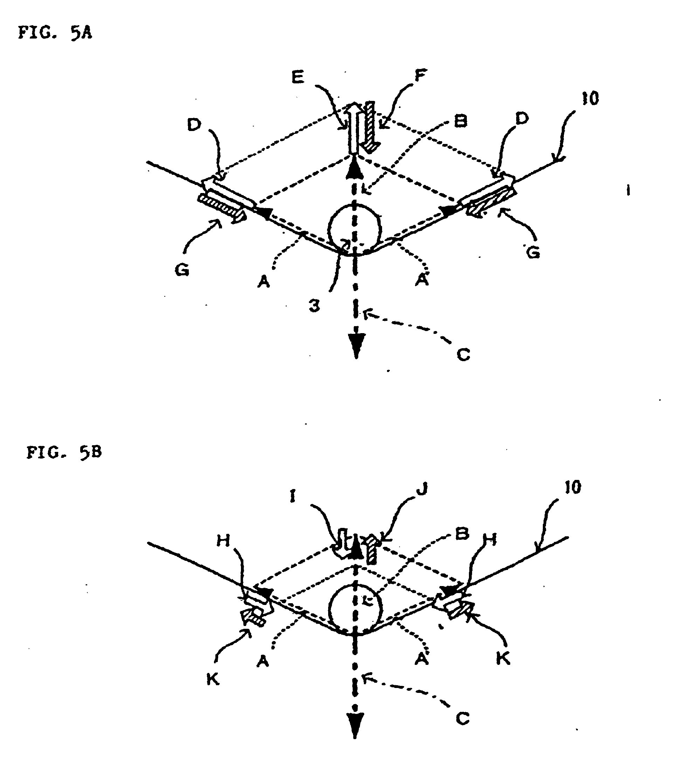

FIGS. 5A and 5B are diagrams for illustrating an operation of the wire tension variation reduction device 2 of the present invention to keep the tension constant. In a stable state, the tension of the wire 10 is A. The wire tension variation reduction device 2 makes an adjustment such that the tension A continually acts on the wire.

FIG. 5A shows a stable state in which a resultant force B of the tension A and tension A of the wire 10 is balanced with an urging force C. As the speed of the wire bobbin or the friction of the brake rollers varies in this state, the wire tension varies and increases. In FIG. 5A, arrows D indicate wire tension increments. The increased tension resultant is indicated by arrow E.

The wire tension variation reduction device 2 applies a force F in a direction to cancel the increased resultant (arrow E). The force F is an increment of an urging force that is produced as the position of the roller 3 of the wire tension variation reduction device 2 is shifted by the tension variation of the wire 10 to cause the spring member 5 to extend.

The force F applied by the wire tension variation reduction device 2 subjects the wire 10 to a tension G in a direction opposite from the aforesaid tension increments D. The tension G reduces the tension increments D to the initial tension A.

FIG. 5B also shows a stable state in which the resultant force B of the tension A and the tension A of the wire 10 is balanced with the urging force C. In this state, the tension of the wire 10 varies but decreases. In FIG. 5B, arrows H indicate wire tension decrements. The resultant force of the decreased tension H and the decreased tension H is indicated by arrow I.

The wire tension variation reduction device 2 applies a force J in a direction to cancel the decreased resultant (arrow I). The force J is a decrement of an urging force that is produced as the position of the roller 3 of the variation reduction device is shifted by the tension variation of the wire 10 to cause the spring member 5 to contract.

The force J applied by the wire tension variation reduction device 2 subjects the wire 10 to a tension K in a direction opposite from the aforesaid tension decrements H. The tension K increases the tension decrements H to the initial tension A.

The wire tension variation reduction device 2 can adjust the tension to be applied to the wire. The tension adjustment can be achieved by adjusting attachment positions of the spring member 5, an elastic body. In attaching each end portion of the spring member to the shaft and the wire-cut electric discharge machine body, at least one of the attachment positions can be changed.

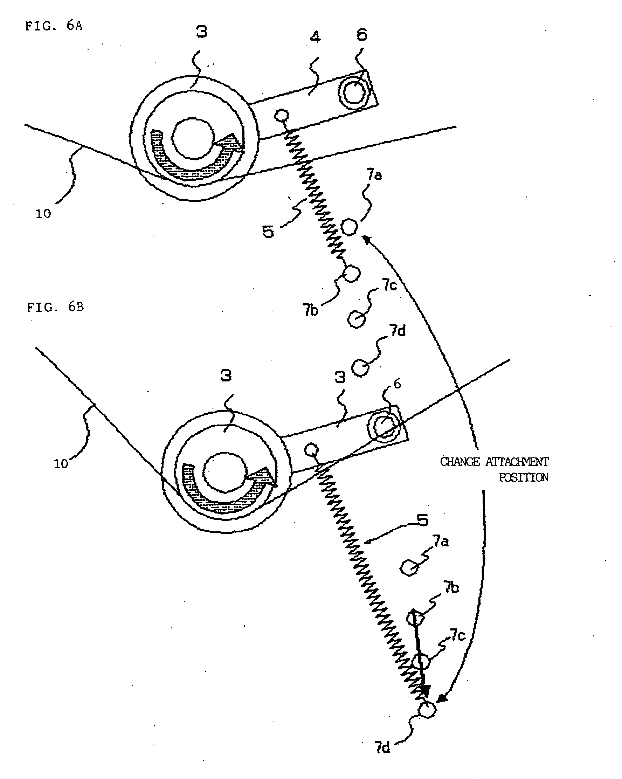

FIGS. 6A and 6B are diagrams for illustrating the attachment positions of the spring member. The attachment positions in which the spring member is mounted on the wire-cut electric discharge machine body are changeable. More specifically, a plurality of attachment positions 7a to 7d in which one end of the spring member 5 is mounted are provided on the machine body side.

As shown in FIGS. 6A and 6B, one end of the spring member 5 is attached to the shaft 4, and the other end is attached to any of the attachment positions 7a to 7d on the wire-cut electric discharge machine body side. Thus, the attachment positions of the spring member on the machine body side are changeable. The elongation of the spring member 5 can be adjusted by alternatively selecting the attachment positions 7a to 7d. By thus adjusting the elongation of the spring member 5, the magnitude of the force to attract the shaft 4 toward the wire 10 can be changed, and the tension the roller 3 applies to the wire 10 can be adjusted.

FIGS. 6A and 6B show cases where the attachment positions 7b and 7d are selected, respectively. In the attachment position 7b of FIG. 6A, the roller 3 can apply a low tension to the wire 10. In the attachment position 7d of FIG. 6B, the roller 3 can apply a high tension to the wire 10.

FIGS. 6A and 6B illustrate an example in which the attachment positions can be changed on the side of the wire-cut electric discharge machine body. Alternatively, however, the tension the roller applies to the wire can be also adjusted by making attachment positions on the shaft side changeable. In this case, the tension the roller applies to the wire changes as the point of action at which the spring member acts on the shaft is varied.

## Claims

1. A wire-cut electric discharge machine comprising:
a wire running system in which a wire is run through a wire bobbin, brake rollers, a wire guide, and a wire take-up device in the order named; and
a device for reducing the variation in wire tension, arranged between the wire bobbin and the brake rollers in the wire running system.

2. The wire-cut electric discharge machine according to claim 1, wherein
said device for reducing the variation in wire tension includes a roller in contact with the wire, a shaft supporting the roller, and an elastic body for urging the shaft to apply a tension to the wire, and
the shaft urged by the elastic body applies a tension to the wire through the roller.

3. The wire-cut electric discharge machine according to claim 2, wherein said shaft has a radial bearing rockably supporting the shaft.

4. The wire-cut electric discharge machine according to claim 2, wherein said elastic body has end portions thereof attached individually to the shaft and a body of the wire-cut electric discharge machine so that at least one of attachment positions of the elastic body can be changed.

5. The wire-cut electric discharge machine according to claim 2, wherein
said elastic body is a spring member;
said shaft and/or said wire-cut electric discharge machine body has a plurality of attachment positions, and
the end portions of the spring member are alternatively attached to any of the attachment positions on the shaft and/or the electric discharge machine.
